(19) Europäisches Patentamt
European Patent Office
Office européen des brevets

(11) **EP 3 928 152 B1**

(12) **FASCICULE DE BREVET EUROPEEN**

(45) Date de publication et mention
de la délivrance du brevet:
**26.04.2023 Bulletin 2023/17**

(21) Numéro de dépôt: **20726219.7**

(22) Date de dépôt: **16.03.2020**

(51) Classification Internationale des Brevets (IPC):
**G02F 1/01** *(2006.01)*      **G02B 26/06** *(2006.01)*
**H01S 3/00** *(2006.01)*

(52) Classification Coopérative des Brevets (CPC):
**G02F 1/0121; H01S 3/0057;** G02B 26/06;
G02F 2203/12; G02F 2203/18; G02F 2203/26;
H01S 3/0071; H01S 3/0078

(86) Numéro de dépôt international:
**PCT/FR2020/050568**

(87) Numéro de publication internationale:
**WO 2020/193914 (01.10.2020 Gazette 2020/40)**

(54) **MÉTHODE DE MISE EN FORME SPATIALE OU TEMPORELLE D'UN FAISCEAU LASER**

VERFAHREN ZUR RÄUMLICHEN ODER ZEITLICHEN FORMUNG EINES LASERSTRAHLS

METHOD FOR SPATIALLY OR TEMPORALLY SHAPING A LASER BEAM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.03.2019 FR 1903192**

(43) Date de publication de la demande:
**29.12.2021 Bulletin 2021/52**

(73) Titulaire: **Commissariat à l'énergie atomique
et aux énergies alternatives**
**75015 Paris (FR)**

(72) Inventeurs:
• **LACAMPAGNE, Lionel**
**33470 GUJAN MESTRAS (FR)**
• **VERMESCH, Sébastien**
**33260 LA TESTE (FR)**
• **FOURTILLAN, Pauline**
**33114 LE BARP (FR)**
• **JULIEN, Xavier**
**40460 Sanguinet (FR)**

(74) Mandataire: **Brevalex**
**56, Boulevard de l'Embouchure**
**B.P. 27519**
**31075 Toulouse Cedex 2 (FR)**

(56) Documents cités:
• **T BAUMERT ET AL: "Rapid communication
Femtosecond pulse shaping by an evolutionary
algorithm with feedback", APPL. PHYS. B, vol. 65,
30 décembre 1997 (1997-12-30), pages 779-782,
XP055651773, cité dans la demande**
• **MA LIANG ET AL: "Control algorithms and
applications of the wavefront sensorless
adaptive optics", PROCEEDINGS OF SPIE;
[PROCEEDINGS OF SPIE ISSN 0277-786X
VOLUME 10524], SPIE, US, vol. 10457, 24 octobre
2017 (2017-10-24), pages 1045711-1045711,
XP060096831, DOI: 10.1117/12.2283378 ISBN:
978-1-5106-1533-5**
• **REZA NASIRI MAHALATI ET AL: "Adaptive
control of input field to achieve desired output
intensity profile in multimode fiber with random
mode coupling", OPTICS EXPRESS, vol. 20, no.
13, 18 juin 2012 (2012-06-18) , page 14321,
XP055239564, US ISSN: 2161-2072, DOI:
10.1364/OE.20.014321**
• **CHRISTIAN JIRAUSCHEK ET AL: "Semianalytic
theory of self-similar optical propagation and
mode locking using a shape-adaptive model
pulse", ARXIV.ORG, CORNELL UNIVERSITY
LIBRARY, 201 OLIN LIBRARY CORNELL
UNIVERSITY ITHACA, NY 14853, 14 juin 2011
(2011-06-14), XP080509175, DOI:
10.1103/PHYSREVA.83.063809**

**Description**

**DOMAINE TECHNIQUE**

La présente invention concerne le domaine de la mise en forme spatiale ou temporelle d'un faisceau laser, notamment d'une impulsion laser.

**ÉTAT DE LA TECHNIQUE ANTÉRIEURE**

La mise en forme spatiale ou temporelle d'un faisceau laser présente de nombreuses applications pratiques allant de la microlithographie à l'amplification de puissance et du stockage optique de données au traitement médical.

De manière générale, la mise en forme spatiale d'un faisceau laser consiste à redistribuer le profil d'intensité et/ou de phase du faisceau dans un plan transversal, c'est-à-dire orthogonal à la direction de propagation de ce faisceau. Dans la suite, nous limiterons à une mise en forme spatiale pour respecter un profil transverse d'intensité prédéterminé, dit profil spatial de consigne. Un cas particulier mais fréquent de profil spatial de consigne est celui d'une distribution uniforme. Il s'agira par exemple de transformer le profil gaussien d'un faisceau en un profil constant, de manière à obtenir une illumination uniforme dans le plan transversal.

Différentes méthodes de mise en forme spatiale d'un faisceau laser sont connues de l'état de la technique. Par exemple on peut utiliser un élément optique telle qu'une lentille pour transformer un profil gaussien en un profil uniforme (*field mapping*) ou bien l'on peut encore diviser le faisceau en une pluralité de faisceaux élémentaire et utiliser un réseau de microlentilles pour homogénéiser le faisceau (*beam integrating*). Toutefois, ces méthodes présentent l'inconvénient de ne pas être adaptatives dans la mesure où elles ne conviennent que pour un profil d'entrée et un profil de sortie donnés d'un faisceau.

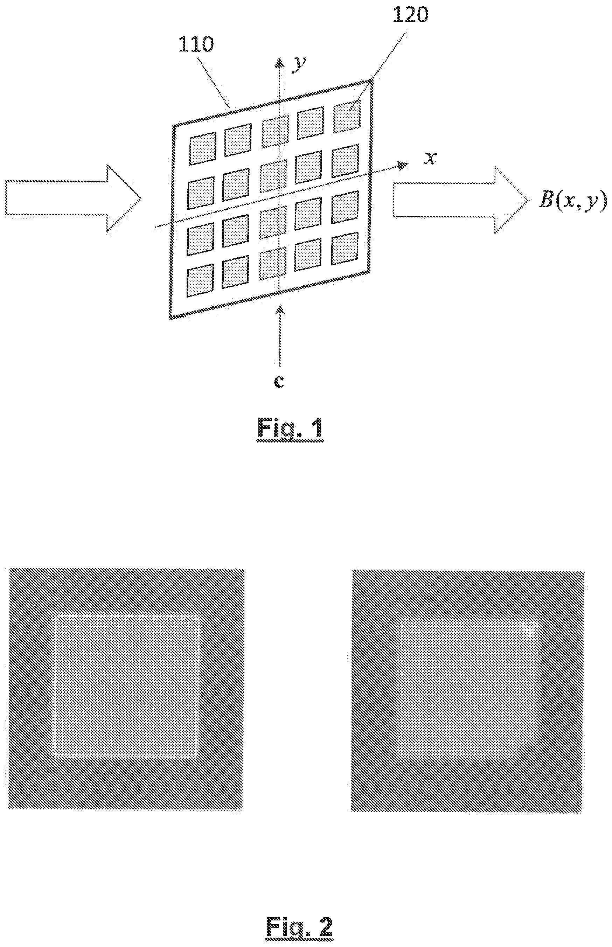

Une méthode de mise en forme spatiale adaptative d'un faisceau a été illustrée en Fig. 1. Elle consiste à illuminer une valve optique telle qu'une matrice passive d'éléments pour contrôler la transmission du faisceau dans le plan transversal. Chaque élément de la matrice peut être contrôlé de manière indépendante de manière à pouvoir obtenir en sortie le profil de consigne désiré. Plus précisément on définit généralement une fonction de mérite mesurant l'écart écart entre le profil de faisceau $B(x,y)$, observé en sortie de la valve optique, et le profil de consigne $B^0(x, y)$. La mise en forme revient alors à trouver la commande C permettant de minimiser l'écart $\|B(x,y)-B^0(x,y)\|^2$.

La commande $C$ peut être représentée par un vecteur c , dit vecteur de commande, de taille $M$, donnant les tensions à appliquer aux différents éléments de la valve optique. Le profil observé et le profil de consigne peuvent être assimilés à des matrices donnant les intensités du faisceau en différents points d'un plan transversal, en sortie de la valve optique. Chacune de ces matrices peut être représentée par un vecteur colonne, dit vecteur de profil, de taille, $P$, par exemple en concaténant les vecteurs colonnes de la matrice en question, soit **b** le vecteur du profil observé et $\mathbf{b}^0$ le vecteur de profil de consigne.

De manière analogue aux techniques utilisées en optique adaptative, on peut effectuer une approximation linéaire en supposant que la réponse **b** dépend linéairement de la commande **c**. Autrement dit, on ne considère alors que les dérivées de la fonction de mérite, appelées fonction d'influence. La matrice permettant de passer du vecteur de commande **c** au vecteur de profil **b** est appelée matrice d'interaction, **S,** et est de taille $P{\times}M$. Elle peut être déterminée en commandant successivement les différents éléments de la valve optique et en observant le vecteur de profil correspondant. Les vecteurs de profil ainsi obtenus ne sont autres que les vecteurs colonnes de la matrice d'interaction. La matrice d'interaction peut être décomposée selon une décomposition SVD

*(Singular Value Décomposition) :*

$$\mathbf{S} = \mathbf{U}\mathbf{\Lambda}\mathbf{V}^{T} \tag{1}$$

où **U** de taille $P{\times}M$ et **V** de taille $M{\times}M$ sont des matrices orthogonales et $\Lambda$ est une matrice de taille $M{\times}M$ dont les termes diagonaux sont les valeurs singulières de la matrice **S** .

Si la matrice $\Lambda$ est de rang $M$, c'est-à-dire si les valeurs singulières sont non nulles, la commande **c** est alors déterminée par :

$$\mathbf{c} = \mathbf{S}^{\dagger}\mathbf{b}^{0} \tag{2}$$

où $S^{\dagger} = V\Lambda^{-1}U^{T}$ est la pseudo-inverse de la matrice $S$.

En pratique, on procède par itérations successives et à chaque itération on mesure le profil transverse d'intensité en appliquant la commande calculée à l'étape précédente.

Cette méthode de mise en forme spatiale fournit un résultat correct sauf si la fonction de mérite admet des minima locaux (dans ce cas, on doit recourir à des algorithmes de recuit simulé ou bien à des algorithmes génétiques qui nécessitent un grand nombre d'évaluations de la fonction de mérite).

En outre, un inconvénient important de cette méthode de mise en forme spatiale est de requérir un grand nombre d'observations. Dans certains cas, notamment lorsqu'il est nécessaire de procéder à des tirs laser de forte puissance, cet inconvénient devient rédhibitoire car la cadence de tir n'est pas compatible avec la stabilité du système.

Pour contourner cette difficulté on suppose alors que l'on peut associer à chaque élément de la commande un et un seul pixel observé (dans ce cas $P = M$) et que chaque élément de la commande a un même effet sur les pixels observés, autrement dit que le système est invariant à une translation près dans le plan transversal.

L'association univoque d'un pixel observé avec un élément de commande nécessite en pratique de corriger le dévers, le centrage et le grandissement (c'est-à-dire respectivement l'offset de translation, la rotation et l'homothétie) de l'image du faisceau dans le plan transversal. Cette opération, dite de transformation plan, alourdit cependant considérablement les calculs de la commande. En outre, l'association entre les éléments de commande et les pixels dans le plan transversal est relativement imprécise, notamment pour des pixels situés sur les bords et dans les angles de l'image. Il en résulte que l'algorithme peut converger vers des valeurs distinctes de celle de la consigne pour ces pixels comme illustré en Fig. 2.

Dans cette figure on a représenté à gauche le profil de consigne que l'on souhaite obtenir en sortie de la valve optique, ici une distribution bidimensionnelle uniforme de forme carrée. A droite, on a représenté le résultat obtenu en sortie de la valve optique en appliquant la commande obtenue selon la méthode de mise en forme décrite ci-dessus, après application de la transformée de plan. On voit que les zones dans les coins de l'image présentent des défauts car elles comportent des pixels ayant des niveaux d'intensité distincts du niveau de consigne.

De manière similaire, la mise en forme temporelle d'un faisceau laser, et plus précisément d'une impulsion laser, consiste à modifier la forme temporelle d'une impulsion de manière à ce que celle-ci respecte une distribution temporelle prédéterminée, dite profil temporel de consigne.

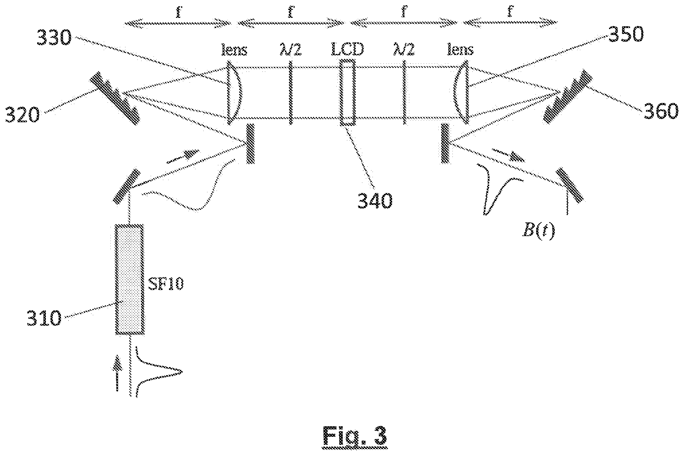

L'article de T.Baumert et al. intitulé « Femtosecond pulse shaping by an evolutionary algorithm with feedback" publié dans Appl. Phys. B 65, pp. 779-782 (1997) propose une méthode de mise en forme temporelle d'une impulsion laser à partir d'un dispositif de mise en forme spatiale, comme représenté schématiquement en Fig. 3.

L'impulsion laser femtoseconde à mettre en forme temporellement est tout d'abord élargie temporellement dans un matériau dispersif, 310. Le faisceau est ensuite dirigé vers un premier réseau de diffraction, 320, séparant les différentes longueurs d'onde. Les composantes aux différentes longueurs d'onde sont focalisées par une première lentille, 330, en différents points d'un modulateur LCD jouant le rôle de valve optique, 340, située dans son plan focal. La valve optique filtre le spectre de l'impulsion au moyen d'une fonction de transfert correspondant à la commande du modulateur. Les différentes composantes spectrales sont ensuite recombinées au moyen d'une seconde lentille, 350, et d'un second réseau, 360, respectivement symétriques de la première lentille et du premier réseau par rapport au modulateur LCD. La mise en forme temporelle de l'impulsion est donc réalisée ici par le modulateur LCD dans le domaine spectral, la dispersion introduite par le premier réseau étant compensée par la dispersion introduite par le second réseau.

On comprend par conséquent qu'une mise en forme temporelle d'un faisceau laser peut être réalisée au moyen d'une mise en forme spatiale par une valve optique placée dans le plan focal d'une lentille. Cette mise en forme temporelle souffre alors des mêmes limitations que la mise en forme spatiale exposée plus haut.

Alternativement, on peut modifier le profil temporel d'une impulsion au moyen d'un modulateur Mach-Zehnder (MZ). L'intensité de l'impulsion laser est alors modulée en faisant varier la commande de l'élément électrooptique du modulateur MZ pendant que l'impulsion le traverse.

Comme dans la mise en forme spatiale, on peut définir une fonction de mérite comme l'écart entre le profil temporel d'intensité, tel qu'observé en sortie du modulateur MZ et le profil temporel de consigne, soit $\|B(t)-B^{0}(t)\|^{2}$. L'acquisition de l'intensité en fonction du temps peut être réalisée à partir d'une simple photodiode.

La commande peut être obtenue comme précédemment en calculant la matrice pseudoinverse de la matrice d'interaction. Pour simplifier les calculs on peut faire l'hypothèse d'une invariance dans le temps de la réponse du modulateur MZ. Cela suppose toutefois que l'on puisse associer la commande du modulateur à un instant d'observation de l'intensité de l'impulsion. Cette association est monodimensionnelle et donc plus simple que dans le cas de la mise en forme spatiale. Il n'en demeure pas moins que cette association est imprécise sur les flancs de montée et de descente de l'impulsion, ce en raison de la bande passante limitée du dispositif de mesure au regard de la fréquence d'échantillonnage de la commande du modulateur MZ.

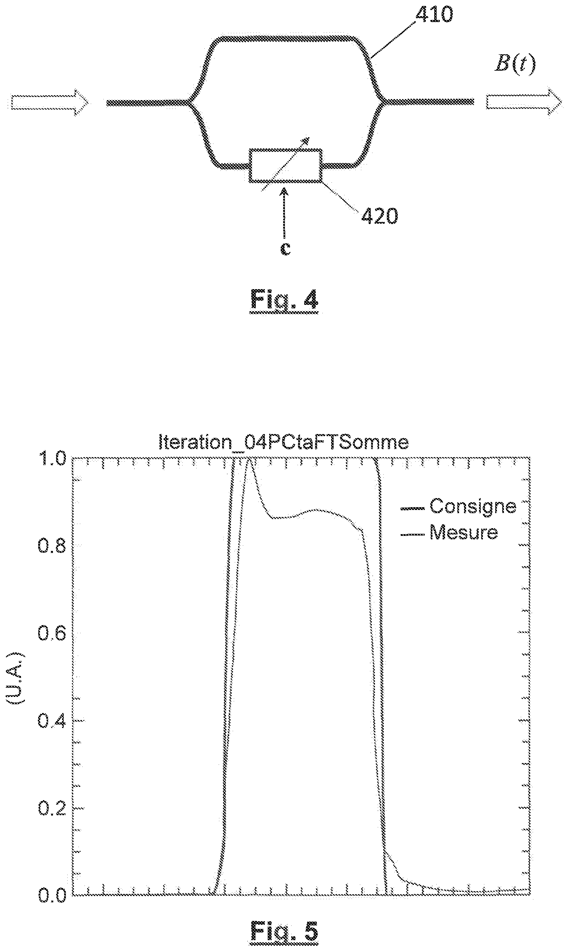

On peut ainsi avoir une divergence entre le profil temporel observé et le profil de consigne comme illustré en Fig. 4. On remarque que le profil temporel de l'impulsion présente des notamment des défauts (effets de bord) en début et fin d'impulsion.

De manière générale, que ce soit dans le cadre d'une mise en forme spatiale ou temporelle, les algorithmes permettant de calculer la commande présentent un manque de robustesse sur les flancs de montée et de descente des signaux, c'est-à-dire dans les zones du signal à fort gradient. Cela peut conduire à des inhomogénéités dans le faisceau (mise en forme spatiale) ou à l'apparition de trous et de pics dans l'impulsion (mise en forme temporelle).

Un but de la présente invention est par conséquent de proposer une méthode de mise en forme spatiale ou temporelle d'un faisceau laser qui ne présente pas les inconvénients précités, en particulier qui ne nécessite pas de calculs complexes et qui ne présente pas d'effets de bord dans les zones de signal à fort gradient.

## EXPOSÉ DE L'INVENTION

La présente invention est définie par une méthode de mise en forme spatiale d'un faisceau laser au moyen d'une valve optique comportant une pluralité de pixels contrôlables en transmission au moyen d'un vecteur de commande, chaque élément du vecteur de commande contrôlant la transmission d'un pixel correspondant et étant initialisé à une valeur prédéterminée, la forme spatiale du faisceau à obtenir étant définie par un profil de consigne dans un plan transversal à la direction de propagation du faisceau, ladite méthode comportant une pluralité d'itérations successives, le vecteur de commande étant mis à jour à chaque itération, chaque itération comprenant :

- une étape d'acquisition de l'image du faisceau dans ledit plan transversal en sortie de la valve optique, pour obtenir un profil du faisceau observé dans ce plan ;
- une étape de calcul des moments du profil observé par rapport à une base produit, la base produit étant constituée par des produits de fonctions d'une base adaptée de carré sommable sur au moins une zone du plan contenant le support du profil de consigne, les spectres desdites fonctions selon deux axes du plan étant bornés par des valeurs maximales prédéterminées de fréquence spatiale ;
- une étape de calcul des rapports entre les composantes du profil de consigne et des composantes correspondantes du profil observé dans la base adaptée, pour en déduire le rapport entre le profil de consigne et le profil observé dans le plan transversal ;
- une étape de détermination du vecteur de commande à l'itération courante en fonction du rapport calculé à l'étape précédente et du vecteur de commande calculé à l'itération précédente ;
- une étape de commande de la valve optique au moyen des éléments du vecteur de commande déterminé à l'étape précédente ;
  les itérations se poursuivant jusqu'à ce qu'un critère d'arrêt prédéterminé soit satisfait.

Après acquisition de l'image du faisceau dans le plan transversal, ladite image est avantageusement corrigée par un dévers, un centrage et un grandissement avant obtention du profil observé.

La base adaptée est de préférence orthogonale et constituée de fonctions polynômiales ou monômiales.

Les fonctions polynômiales peuvent être des polynômes de Zernike. Alternativement, les fonctions monômiales peuvent être du type $f_{ij}(x,y) = x^i y^j$, telles que $i + j \leq d_{max}$ où $d_{max}$ est un degré maximum prédéterminé et $x, y$ sont des coordonnées cartésiennes dans le plan transversal.

La zone du plan, $\Omega$, entoure avantageusement le support du profil de consigne, $\sigma$, par une marge de sécurité prédéterminée.

Le calcul des moments du profil observé est typiquement effectué au moyen de

$$\iint_{\Omega} f_{pq}(x, y) f_{ij}(x, y) B(x, y) dx dy$$

où $f_{pq}(x, y)$, $f_{ij}(x, y)$ sont deux fonctions de la base adaptée et $B(x, y)$ est le profil observé dans le plan transversal.

Le calcul des rapports entre les composantes du profil de consigne et des composantes correspondantes du profil observé dans la base adaptée est effectué par $\tilde{\mathbf{r}}_n = \tilde{\mathbf{B}}_n^{-1} \tilde{\mathbf{b}}^0$ où $\tilde{\mathbf{B}}_n$ représente la matrice des moments du profil observé, $\tilde{\mathbf{b}}^0$ est un vecteur dont les éléments donnent la projection du profil de consigne sur les différentes fonctions de la base adaptée et $\tilde{\mathbf{r}}_n$ est un vecteur dont les éléments donnent les rapports entre les composantes du profil de consigne et du profil observé dans la base adaptée.

On calcule le rapport entre le profil de consigne et le profil observé dans le plan transversal à l'itération courante

$$R_n(x, y) = \sum_{i=1}^{N} \sum_{j=1}^{N} \tilde{r}_{ij,n} f_{ij}(x, y)$$

au moyen de où $f_{ij}(x, y)$ sont les fonctions de la base adaptée et $\tilde{r}_{ij,n}$ les rapports entre les composantes du profil de consigne et du profil observé à l'itération courante dans la base adaptée et l'on déduit le vecteur de commande de l'itération courante, $\mathbf{c}_n$, comme celui dont les éléments sont les produits des éléments du vecteur de commande à l'itération précédente, $\mathbf{c}_{n-1}$, et les valeurs du rapport $R_n(x,y)$ prises aux points où se trouvent les pixels contrôlables en transmission.

Le critère d'arrêt est satisfait lorsque les valeurs du rapport $R_n(x, y)$ prises aux points où se trouvent les pixels contrôlables en transmission sont toutes comprises dans un intervalle de tolérance autour de la valeur 1.

L'invention concerne également une méthode de mise en forme temporelle d'une impulsion laser au moyen d'un modulateur d'intensité, l'intensité de l'impulsion pouvant être contrôlée au cours du temps par un vecteur de commande, chaque élément du vecteur de commande contrôlant la transmission du modulateur en un instant donné et étant initialisé à une valeur prédéterminée, la forme temporelle à obtenir étant définie par un profil de consigne, ladite méthode comportant une pluralité d'itérations successives, le vecteur de commande étant mis à jour à chaque itération, chaque itération comprenant :

- une étape d'acquisition de l'impulsion en sortie du modulateur pour obtenir un profil observé de l'impulsion ;
- une étape de calcul des moments du profil observé par rapport à une base produit, la base produit étant constituée par des produits de fonctions d'une base adaptée de carré sommable sur au moins sur un intervalle de temps contenant le support du profil de consigne, les spectres desdites fonctions étant bornés par une valeur maximale prédéterminée de fréquence ;
- une étape de calcul des rapports entre les composantes du profil de consigne et des composantes correspondantes du profil observé dans la base adaptée, pour en déduire le rapport entre le profil de consigne et le profil observé dans le plan transversal au cours de l'intervalle de temps ;
- une étape de détermination du vecteur de commande à l'itération courante en fonction du rapport calculé à l'étape précédente et du vecteur de commande calculé à l'itération précédente ;
- une étape de commande du modulateur d'intensité au moyen des éléments du vecteur de commande déterminé à l'étape précédente ;

les itérations se poursuivant jusqu'à ce qu'un critère d'arrêt prédéterminé soit satisfait.

Le modulateur d'intensité peut notamment être un modulateur Mach-Zehnder.

L'acquisition de l'impulsion peut notamment être réalisée au moyen d'une photodiode en sortie du modulateur d'intensité et d'un oscilloscope à mémoire.

La base adaptée est de préférence orthogonale et constituée de fonctions polynômiales ou monômiales.

Les fonctions polynômiales peuvent être des polynômes de Legendre.

L'intervalle de temps, $\Omega$, inclut avantageusement le support du profil de consigne, $\sigma$, avec une marge de sécurité prédéterminée.

Le calcul des moments du profil observé de l'impulsion est typiquement effectué au moyen de

$$\int_{\Omega} f_i(t) f_j(t) B(t) dt$$

où $f_i(t), f_j(t)$ sont deux fonctions de la base adaptée et $B(t)$ est le profil observé de l'impulsion.

Le calcul des rapports entre les composantes du profil de consigne et des composantes correspondantes du profil observé dans la base adaptée est effectué par $\tilde{\mathbf{r}}_n = \tilde{\mathbf{B}}_n^{-1} \tilde{\mathbf{b}}^0$ où $\tilde{\mathbf{B}}_n$ représente la matrice des moments du profil observé, $\tilde{\mathbf{b}}^0$ est un vecteur dont les éléments donnent la projection du profil de consigne sur les différentes fonctions de la base adaptée et $\tilde{\mathbf{r}}_n$ est un vecteur dont les éléments donnent les rapports entre les composantes du profil de consigne et du profil observé dans la base adaptée.

On calcule le rapport entre le profil de consigne et le profil observé dans l'intervalle de temps au moyen de

$$R_n(t) = \sum_{i=1}^{N} \tilde{r}_{n,i} f_i(t)$$

où $\tilde{r}_{n,i}$ est la i-ème composante de $\tilde{\mathbf{r}}_n$ où $f_i(t)$ sont les fonctions de la base adaptée et $\tilde{r}_{n,i}$ les rapports entre les composantes du profil de consigne et du profil observé à l'itération courante dans la base adaptée et que l'on déduit le vecteur de commande de l'itération courante, $\mathbf{c}_n$, comme celui dont les éléments sont les produits des éléments du vecteur de commande à l'itération précédente, $\mathbf{c}_{n-1}$, et les valeurs du rapport $R_n(t)$ prises aux instants auxquels la transmission du modulateur d'intensité est contrôlée.

Le critère d'arrêt est satisfait lorsque les valeurs du rapport $R_n(t)$ prises aux instants auxquels la transmission du modulateur d'intensité est contrôlée, sont toutes comprises dans un intervalle de tolérance autour de la valeur 1.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un dispositif de mise en forme spatiale d'un faisceau laser, connu de l'état de la technique ;
La Fig. 2 montre sur un exemple des effets de bord intervenant dans la mise en forme spatiale d'un faisceau laser au moyen du dispositif de la Fig. 1 ;
La Fig. 3 représente de manière schématique un premier dispositif de mise en forme temporelle d'un faisceau laser, connu de l'état de la technique ;
La Fig. 4 illustre de manière schématique un second dispositif de mise en forme temporelle d'un faisceau laser, connu de l'état de la technique ;
La Fig. 5 montre sur un exemple des effets de bord intervenant dans la mise en forme temporelle au moyen du dispositif de la Fig. 4 ;
La Fig. 6 représente sous forme d'ordinogramme une méthode de mise forme spatiale d'un faisceau laser selon un premier mode de réalisation de l'invention ;
La Fig. 7 représente un exemple comparatif d'une mise en forme spatiale d'un faisceau laser selon le premier mode de réalisation de l'invention et selon une méthode connue de l'état de la technique ;
La Fig. 8 représente sous forme d'ordinogramme une méthode de mise en forme temporelle d'un faisceau laser selon un second mode de réalisation de l'invention ;
La Fig. 9 représente un exemple comparatif d'une mise en forme temporelle d'un faisceau laser selon le second mode de réalisation de l'invention et selon une méthode connue de l'état de la technique.

## EXPOSÉ DÉTAILLÉ DE MODES DE RÉALISATION PARTICULIERS

On considérera tout d'abord un dispositif de mise en forme spatiale d'un faisceau laser tel que représenté en Fig. 1.

L'idée à la base de l'invention est de s'affranchir des effets de bord en utilisant la méthode des moments dans le calcul de la commande.

On note comme précédemment $B(x,y)$ le profil d'intensité du faisceau, tel qu'observé, dans un plan transversal en sortie de la valve optique et $B^0(x, y)$ le profil de consigne.

On cherche à comparer les profils $B(x, y)$ et $B^0(x, y)$.

$$R(x, y) = \frac{B^0(x, y)}{B(x, y)}$$

Pour ce faire, on définit $R(x, y) = \frac{B^0(x, y)}{B(x, y)}$ donnant en tout point le rapport entre le profil observé et le profil de consigne. Une méthode triviale consisterait à calculer ce rapport point à point. Toutefois, il est clair qu'une telle méthode ne peut être appliquée dans les zones où $B(x, y)$ est faible ou nul comme cela peut être le cas en bord de faisceau dès lors que la correction de l'image du faisceau dans le plan transversal (dévers, centrage et grandissement) n'est pas parfaite. Cette difficulté peut être contournée en n'effectuant le calcul de $R(x, y)$ uniquement dans les zones où $B(x, y)$ est supérieur à une valeur de seuil prédéterminée et en extrapolant le résultat dans les zones de fort gradient, en bord de faisceau. Toutefois, cette méthode suppose d'avoir une bonne connaissance *a priori* du profil du faisceau et n'est pas du tout robuste.

Pour s'affranchir du mauvais conditionnement du rapport $R(x, y)$ en bord de faisceau, il est proposé de l'exprimer sous une forme faible :

$$\iint F(x, y) R(x, y) B(x, y) dx dy = \iint F(x, y) B^0(x, y) dx dy \qquad (3)$$

où $F(x, y)$ est un signal quelconque dans le plan transversal. On remarquera que la sommation dans le terme de droite est effectuée sur le support $\sigma$ du profil de consigne alors que la sommation dans le terme de gauche peut porter sur une zone plus étendue que $\sigma$.

Une condition nécessaire et suffisante pour que la relation (3) soit vérifiée $\forall F$, est qu'elle le soit pour des fonctions formant une base de $L^2\left(\mathbb{R}^2\right)$, c'est-à-dire de l'espace des fonctions de carré intégrable sur $\mathbb{R}^2$ voire plus simplement de $L^2(\Omega)$ où $\Omega$ inclut le support $\sigma$ avec une marge de sécurité. Par exemple si $\sigma = [-a,a] \times [-a,a]$ on pourra

prendre $\Omega = [-a-\varepsilon,a+e]\times[-a-\varepsilon,a+\varepsilon]$ où $\varepsilon$ est la marge de sécurité.

En pratique, on se contentera de considérer une famille libre, $\Lambda(\Omega)$, de $N^2$ fonctions de $L^2(\Omega)$ dont les spectres selon les axes Ox et Oy sont bornés par des valeurs maximales prédéterminées de fréquence spatiale. Par abus de langage, $\Lambda(\Omega)$ sera désignée base de $L^2(\Omega)$.

Les valeurs maximales prédéterminées de fréquence spatiale sont données par la résolution spatiale souhaitée selon les axes Ox et Oy, c'est à dire par $\dfrac{1}{\delta_x},\dfrac{1}{\delta_y}$ où $\delta_x,\delta_y$ sont des intervalles de discrétisation selon ces axes. On choisira avantageusement $\delta_x$ (resp. $\delta_y$) égal à la plus faible valeur parmi le pas d'échantillonnage du profil de consigne, le pas d'échantillonnage du profil mesuré en sortie de la valve optique et le pas des pixels de la valve optique, autrement dit le pas d'application de la commande, selon l'axe Ox (resp. Oy).

Soit $f_{ij}$, $i = 1,...,N$, $j = 1,...,N$ les éléments de la base $\Lambda(\Omega)$, la relation (3) devient si l'on se contente d'un développement à l'ordre $N$ de $R(x, y)$ dans cette base :

$$\iint f_{pq}(x,y)\sum_{i=1}^{N}\sum_{j=1}^{N}\tilde{r}_{ij}f_{ij}(x,y)B(x,y)dxdy = \iint f_{pq}(x,y)B^0(x,y)dxdy \qquad (4)$$

$\forall p,q,\ 1 \le p \le N,\ 1 \le q \le N.$

La relation (4) peut encore s'exprimer de manière équivalente par :

$$\sum_{i=1}^{N}\sum_{j=1}^{N}\tilde{r}_{ij}\left(\iint f_{pq}(x,y)f_{ij}(x,y)B(x,y)dxdy\right) = \iint f_{pq}(x,y)B^0(x,y)dxdy \qquad (5)$$

ou encore de manière plus condensée sous la forme matricielle :

$$\tilde{\mathbf{B}}\tilde{\mathbf{r}} = \tilde{\mathbf{b}}^0 \qquad (6)$$

où $\tilde{\mathbf{b}}^0$ est le vecteur de taille $N^2$ constitué par la concaténation des vecteurs colonnes de la matrice $\tilde{\mathbf{B}}^0$ dont les éléments sont donnés par $\tilde{b}_{pq}^0 = \iint f_{pq}(x,y)B^0(x,y)dxdy$, $\tilde{\mathbf{B}}$ est la matrice de taille $N^2 \times N^2$ dont les éléments sont donnés par $\tilde{b}_{k\ell} = (\iint f_{pq}(x, y)f_{ij}(x, y)B(x, y)dxdy)$ avec $k = (q-1)N + p$, $\ell = (j -1)N + i$ et $\tilde{\mathbf{r}}$ est le vecteur de taille $N^2$ résultant de la concaténation des vecteurs colonnes de la matrice $\tilde{\mathbf{R}}$ dont les éléments sont données par $\tilde{R}_{ij} = \tilde{r}_{ij}$.

La base $f_{ij}$ de $L^2(\Omega)$ est choisie orthogonale et adaptée à la géométrie du faisceau. De préférence, la base est choisie polynômiale ou monômiale. Par exemple, pour un faisceau de section rectangulaire, on pourra choisir les fonctions monômiales $f_{ij}(x, y) = x^i y^j$ (en supposant les coordonnées $x,y$ normalisées par les dimensions de $\Omega$ selon les axes Ox et Oy) et se limiter à celles vérifiant $i+j \le d_{max}$ où $d_{max}$ est un degré maximum voire à celles telles que $i + j = d$ où $d$ est le degré des monômes considérés.

On comprendra que lorsque le faisceau présente une symétrie de révolution, on choisira une base polaire plutôt qu'une base cartésienne. La relation (5) sera alors avantageusement exprimée en coordonnées polaires :

$$\sum_{i=1}^{N}\sum_{j=1}^{N}\tilde{r}_{ij}\left(\iint f_{pq}(r,\theta)f_{ij}(r,\theta)B(r,\theta)rdrd\theta\right) = \iint f_{pq}(r,\theta)B^0(r,\theta)rdrd\theta \qquad (7)$$

Une base adaptée pourra alors être celle des polynômes de Zernike ou pseudo-Zernike.

Dans tous les cas, on peut obtenir le vecteur $\tilde{\mathbf{r}}$ de rapport des profils au moyen de :

$$\tilde{\mathbf{r}} = \tilde{\mathbf{B}}^{-1}\tilde{\mathbf{b}}^0 \qquad (8)$$

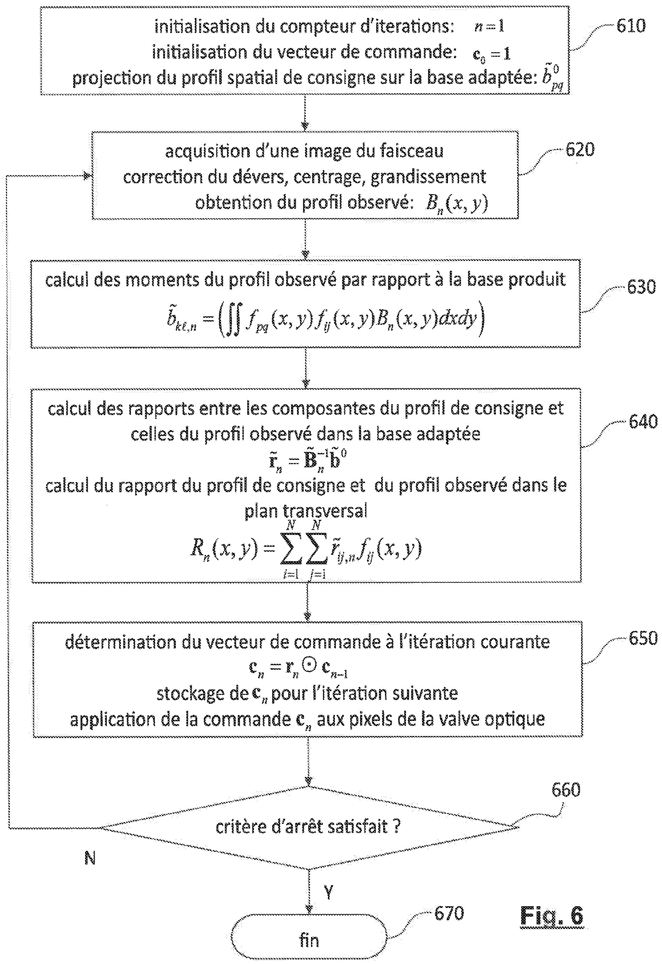

La Fig. 6 représente sous forme d'ordinogramme une méthode de mise forme spatiale d'un faisceau laser selon un premier mode de réalisation de l'invention.

On utilise pour cette méthode le dispositif déjà illustré en Fig. 1, la valve optique étant illuminée par le faisceau à mettre en forme spatialement.

On suppose que l'on souhaite obtenir un profil de consigne ($B^0(x, y)$, $B^0(r,\theta)$) en sortie de la valve optique.

A l'étape 610, on initialise un compteur d'itérations : $n = 1$.

On projette en outre le profil de consigne sur les fonctions de la base adaptée pour obtenir les coefficients $\tilde{b}^0_{pq}$ pour les $N$ premières fonctions de la base.

On initialise également la commande des différents éléments (ou pixels) de la valve optique à une valeur prédéterminée, par exemple $c_0 = 1$ où $1$ est le vecteur de taille $M$ dont tous les éléments sont égaux à 1. La taille $M$ est fonction du pas de discrétisation de la commande et des dimensions du faisceau.

On entre ensuite dans une boucle itérative dans laquelle on construit de proche en proche la commande à appliquer aux éléments de manière à obtenir le profil de consigne.

En 620, on fait l'acquisition d'une image du faisceau dans un plan transversal en sortie de la valve optique. Optionnellement mais avantageusement, on effectue une transformation plane pour corriger le dévers, centrage et grandissement) de l'image obtenue à l'étape précédente. Dans tous les cas, on obtient un profil du faisceau observé ($B_n(x, y)$, $B_n(r,\theta)$)

A l'étape 630, on calcule les moments du profil observé, par rapport à la base produit. La base produit est définie comme l'ensemble des produits des fonctions de la base adaptée.

Autrement dit, dans une représentation en coordonnées cartésiennes, on calcule les éléments $b_{k\ell,n} = (\iint f_{pq}(x, y)f_{ij}(x, y)B_n(x, y)dxdy)$ comme défini précédemment. On forme ainsi une matrice $\tilde{\mathbf{B}}_n$ à partir de ces éléments, où $b_{k\ell,n}$ est l'élément à la ligne $k$ et la colonne $\ell$ de $\tilde{\mathbf{B}}_n$.

A l'étape 640, on calcule le vecteur des rapports des composantes des profils dans la base adaptée, $\tilde{\mathbf{r}}_n$, au moyen de $\tilde{\mathbf{r}}_n = \tilde{\mathbf{B}}_n^{-1}\tilde{\mathbf{b}}^0$ puis on en déduit le rapport des profils dans le plan transversal au moyen de

$$R_n(x, y) = \sum_{i=1}^{N}\sum_{j=1}^{N} \tilde{r}_{ij,n} f_{ij}(x, y)$$

où $\tilde{r}_{ij,n}$ est la $(j-1)N + i$-ème composante de $\tilde{\mathbf{r}}_n$. En pratique, $R_n(x, y)$ est discrétisé (échantillonné spatialement) aux mêmes points que la commande $c_{n-1}$, pour obtenir un vecteur $\mathbf{r}_n$ de taille $M$. La commande à appliquer est alors définie par le vecteur :

$$\mathbf{c}_n = \mathbf{r}_n \odot \mathbf{c}_{n-1} \tag{9}$$

où $\odot$ est le produit de Hadamard. Le nouveau vecteur de commande est stocké pour l'itération suivante.

A l'étape 650, on applique la commande déterminée à l'étape précédente, $c_n$, aux différents pixels de la valve optique. Plus précisément chaque élément de $c_n$ est appliqué à un pixel correspondant de la valve optique, contrôlable en transmission.

A l'étape 660, on teste si un critère d'arrêt est vérifié. Si ce n'est pas le cas on retourne à l'étape 620. En revanche si c'est le cas, la méthode de mise en forme spatiale se termine en 670. Le critère d'arrêt peut être une condition sur les éléments du vecteur $\mathbf{r}_n$, à savoir qu'ils soient tous compris dans un intervalle de tolérance autour de valeur 1 ou, à défaut qu'un nombre d'itérations maximum $n_{max}$ prédéterminé soit atteint.

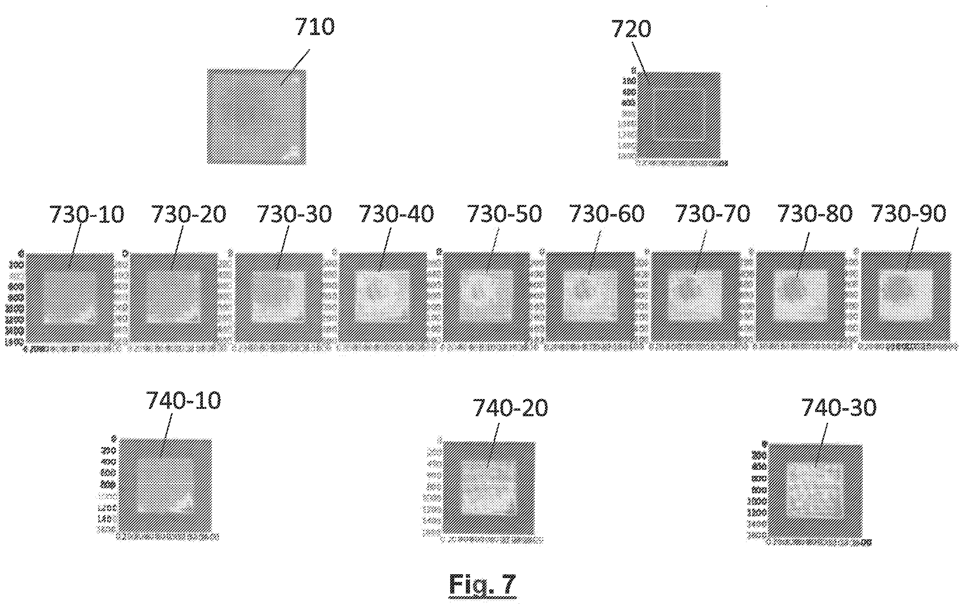

La Fig. 7 représente un exemple comparatif d'une mise en forme spatiale d'un faisceau laser selon le premier mode de réalisation de l'invention et selon une méthode connue de l'état de la technique.

On a indiqué en 710, le profil du faisceau en sortie de la valve optique en absence de commande ($c_0 = 1$) et en 720, le profil de consigne, choisi ici uniforme.

Les profils indiqués par 730-1 à 730-9 correspondent aux 9 premières itérations de la méthode de mise en forme spatiale connue de l'état de technique, telle qu'exposée en relation avec les expressions (1) et (2), autrement dit par le calcul itéré de la pseudo-inverse de la matrice d'interaction. On remarque la formation au bout de 9 itérations d'un trou au milieu du profil.

Les profils indiqués par 740-1 à 740-3 correspondent aux 3 premières itérations de la méthode de mise en forme spatiale selon le premier mode de réalisation de l'invention, telle qu'exposée en relation avec la Fig. 6.

La base adaptée était ici celle des monômes de degré 5, c'est-à-dire $f_{ij}(x,y) = x^i y^j$ avec $i + j = 5$. On remarque qu'au bout de 3 itérations le profil est beaucoup plus uniforme que celui obtenu par la méthode connue de l'état de la technique au bout de 9 itérations.

On considère maintenant dispositif de mise en forme temporelle d'un faisceau laser, tel que celui représenté en Fig. 4.

La méthode de mise en forme temporelle du faisceau s'affranchit des effets de bord en utilisant la méthode des moments comme pour la mise en forme spatiale.

Plus précisément, on note $B(t)$ le profil temporel de l'impulsion laser en sortie du modulateur MZ et $B^0(t)$ le profil temporel de consigne.

$$R(t) = \frac{B^0(t)}{B(t)}$$

On compare les profils $B(t)$ et $B^0(t)$ au moyen du rapport $R(t) = \dfrac{B^0(t)}{B(t)}$ .

Pour s'affranchir du mauvais conditionnement du rapport $R(t)$ en début et en fin d'impulsion, il est proposé, comme précédemment, de l'exprimer sous une forme faible :

$$\int F(t)R(t)B(t)dt = \int F(t)B^0(t)dt \qquad (10)$$

où $F(t)$ est un signal temporel quelconque. La sommation dans le terme de droite est effectuée sur le support $\sigma$ du profil temporel de consigne alors que la sommation dans le terme de gauche peut porter sur une zone plus étendue que $\sigma$.

Une condition nécessaire et suffisante pour que la relation (10) soit vérifiée $\forall F$, est qu'elle le soit pour des fonctions formant une base de $L^2(\mathbb{R})$ , voire plus simplement de $L^2(\Omega)$ où $\Omega$ inclut le support $\sigma$ avec une marge de sécurité. Par exemple, si $\sigma = [t_{start}, t_{end}]$ on pourra prendre $\Omega = [t_{start} - \varepsilon, t_{end} + \varepsilon]$ où $\varepsilon$ est la marge de sécurité.

De même que précédemment, on choisira en pratique une famille libre, $\Lambda(\Omega)$, de $N$ fonctions de $L^2(\Omega)$ dont les spectres sont bornés par une valeur maximale prédéterminée de fréquence. Par abus de langage, $\Lambda(\Omega)$ sera désignée base de $L^2(\Omega)$.

La valeur maximale prédéterminée de fréquence est donnée par la résolution temporelle souhaitée, $\dfrac{1}{\delta_t}$ . On choisira avantageusement $\delta_t$ égal à la plus faible valeur parmi la période d'échantillonnage du profil temporel de consigne, la période d'échantillonnage du profil temporel mesuré en sortie de la valve optique et la période d'application de la commande temporelle dans le modulateur MZ.

Soit $f_i$, $i=1,...,N$ les éléments de $\Lambda(\Omega)$, la relation (10) devient si l'on se contente d'un développement à l'ordre $N$ de $R(t)$ dans cette base :

$$\int f_j(t)\sum_{i=1}^{N} \tilde{r}_i f_i(t)B(t)dt = \int f_j(t)B^0(t)dt \qquad \forall j, \quad 1 \le j \le N \qquad (11)$$

soit encore :

$$\sum_{i=1}^{N} \tilde{r}_i \int f_j(t)f_i(t)B(t)dt = \int f_j(t)B^0(t)dt \qquad (12)$$

ou encore de manière plus condensée sous la forme matricielle :

$$\tilde{\mathbf{B}}\tilde{\mathbf{r}} = \tilde{\mathbf{b}}^0 \qquad (13)$$

où $\tilde{\mathbf{b}}^0$ est le vecteur de taille $N$ constitué par les éléments $\tilde{b}_j^0 = \int f_j(t)B^0(t)dt$ , $j = 1,..,N$ ; $\tilde{\mathbf{B}}$ est la matrice symétrique de taille $N \times N$ dont les éléments sont donnés par $\tilde{b}_{ij} = (\int f_i(t)f_j(t)B(t)dt)$ et $\tilde{\mathbf{r}}$ est le vecteur de taille $N$ dont les éléments sont les composantes $\tilde{r}_i$.

La base est choisie orthogonale, de préférence polynômiale ou monômiale. On pourra par exemple choisir comme base les polynômes de Legendre.

Enfin, on peut obtenir le vecteur $\tilde{\mathbf{r}}$ des rapports de composantes de profils dans la base adaptée au moyen de :

$$\tilde{\mathbf{r}} = \tilde{\mathbf{B}}^{-1}\tilde{\mathbf{b}}^{0} \tag{14}$$

et en déduire le rapport des profils au moyen de:

$$R(t) = \sum_{i=1}^{N} \tilde{r}_i f_i(t) \tag{15}$$

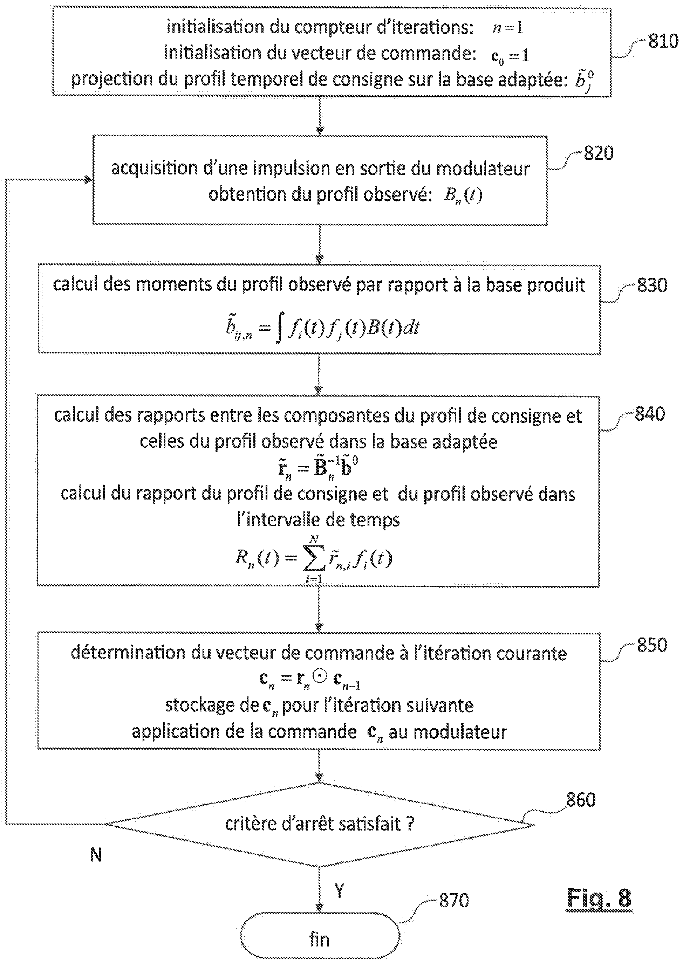

La Fig. 8 représente sous forme d'ordinogramme une méthode de mise en forme temporelle d'un faisceau laser selon un second mode de réalisation de l'invention.

On utilise pour cette méthode le dispositif déjà illustré en Fig. 4, le faisceau laser étant injecté dans le modulateur MZ.

On suppose que l'on souhaite obtenir un profil de consigne $B^0(t)$ en sortie du modulateur d'intensité.

A l'étape 810, on initialise un compteur d'itérations : $n = 1$.

On projette en outre le profil temporel de consigne sur les fonctions de la base adaptée pour obtenir les coefficients $\tilde{b}_j^0 = \int f_j(t)B^0(t)dt$ pour les $N$ premières fonctions de la base.

On initialise également la commande la commande du modulateur, par exemple $\mathbf{c}_0 = \mathbf{1}$ où $\mathbf{1}$ est le vecteur de taille $M$ dont tous les éléments sont égaux à 1. La taille $M$ est fonction de la période d'échantillonnage et de la durée de l'impulsion à traiter (durée de $\Omega$ par exemple).

On entre ensuite dans une boucle itérative dans laquelle on construit de proche en proche la commande à appliquer au modulateur de manière à obtenir le profil de consigne.

En 820, on fait l'acquisition de l'impulsion en sortie du modulateur, par exemple au moyen d'une photodiode et d'un oscilloscope à mémoire. On obtient ainsi un profil d'impulsion, observé à l'itération n, soit $B_n(t)$.

A l'étape 830, on calcule les moments du profil observé, par rapport aux fonctions de la base adaptée. Autrement dit, on calcule les éléments $b_{ij,n} = \int f_i(t)f_j(t)B(t)dt$ tels que définis précédemment. On construit ainsi une matrice $\tilde{\mathbf{B}}_n$ à partir de ces éléments, où $\tilde{b}_{ij,n}$ est l'élément à la ligne $i$ et la colonne $j$ de $\tilde{\mathbf{B}}_n$.

A l'étape 840, on calcule le vecteur des rapports des composante des profils dans la base adaptée, $\tilde{r}_n$, au moyen de $\tilde{\mathbf{r}}_n = \tilde{\mathbf{B}}_n^{-1}\tilde{\mathbf{b}}^0$ et on en déduit le rapport des profils au cours du temps par :

$$R_n(t) = \sum_{i=1}^{N} \tilde{r}_{n,i} f_i(t) \tag{16}$$

où $\tilde{r}_{n,i}$ est la i-ème composante de $\tilde{\mathbf{r}}_n$.

A l'étape 850, on calcule la commande à appliquer par $C_n(t) = R_n(t).C_{n-1}(t)$. En pratique on échantillonne $R(t)$ (aux mêmes instants auxquels la commande $C_{n-1}$ a été échantillonnée) pour obtenir un vecteur $\mathbf{r}_n$ de taille $M$. La commande à appliquer est alors définie par le vecteur :

$$\mathbf{c}_n = \mathbf{r}_n \odot \mathbf{c}_{n-1} \tag{17}$$

où $\odot$ est le produit de Hadamard. L'application de la commande est réalisée en modulant l'intensité de l'impulsion pendant la $m$-ème période d'échantillonnage par le $m$-ème élément du vecteur $\mathbf{c}_n$. Le vecteur $\mathbf{c}_n$ est stocké en mémoire pour l'itération suivante.

A l'étape 860, on teste si un critère d'arrêt est vérifié. Si ce n'est pas le cas on retourne à l'étape 820. En revanche si c'est le cas, la méthode de mise en forme temporelle se termine en 870. Le critère d'arrêt peut être une condition sur les éléments du vecteur $\mathbf{r}_n$, à savoir qu'ils soient tous compris dans un intervalle de tolérance autour de valeur 1 ou, à défaut qu'un nombre d'itérations maximum $n_{max}$ prédéterminé soit atteint.

**Revendications**

1. Méthode de mise en forme spatiale d'un faisceau laser au moyen d'une valve optique comportant une pluralité de pixels contrôlables en transmission au moyen d'un vecteur de commande, chaque élément du vecteur de commande contrôlant la transmission d'un pixel correspondant et étant initialisé à une valeur prédéterminée, la forme spatiale du faisceau à obtenir étant définie par un profil de consigne dans un plan transversal à la direction de propagation du faisceau, ladite méthode comportant une pluralité d'itérations successives, le vecteur de commande étant mis à jour à chaque itération, chaque itération comprenant :

- une étape d'acquisition (620) de l'image du faisceau dans ledit plan transversal en sortie de la valve optique, pour obtenir un profil du faisceau observé dans ce plan ;
- une étape de calcul (630) des moments du profil observé par rapport à une base produit, la base produit étant constituée par des produits de fonctions d'une base adaptée de carré sommable sur au moins une zone du plan contenant le support du profil de consigne, les spectres desdites fonctions selon deux axes du plan étant bornés par des valeurs maximales prédéterminées de fréquence spatiale ;
- une étape de calcul (640) des rapports entre les composantes du profil de consigne et des composantes correspondantes du profil observé dans la base adaptée, pour en déduire le rapport entre le profil de consigne et le profil observé dans le plan transversal ;
- une étape de détermination (650) du vecteur de commande à l'itération courante en fonction du rapport calculé à l'étape précédente et du vecteur de commande calculé à l'itération précédente ;
- une étape de commande (660) de la valve optique au moyen des éléments du vecteur de commande déterminé à l'étape précédente ;
les itérations se poursuivant jusqu'à ce qu'un critère d'arrêt prédéterminé soit satisfait.

2. Méthode de mise en forme spatiale d'un faisceau laser selon la revendication 1, **caractérisée en ce que** la base adaptée est orthogonale et constituée de fonctions polynômiales ou monômiales.

3. Méthode de mise en forme spatiale d'un faisceau laser selon la revendication 2, **caractérisée en ce que** les fonctions polynômiales sont des polynômes de Zernike.

4. Méthode de mise en forme spatiale d'un faisceau laser selon la revendication 2, **caractérisée en ce que** les fonctions monômiales sont du type $f_{ij}(x,y) = x^i y^j$, telles que $i + j \leq d_{\max}$ où $d_{\max}$ est un degré maximum prédéterminé et $x$, $y$ sont des coordonnées cartésiennes dans le plan transversal.

5. Méthode de mise en forme spatiale d'un faisceau laser selon la revendication 4, **caractérisée en ce que** le calcul des moments du profil observé est effectué au moyen de $\iint_{\Omega} f_{pq}(x,y)f_{ij}(x,y)B(x,y)dxdy$ où $f_{pq}(x,y), f_{ij}(x,y)$ sont deux fonctions de la base adaptée et $B(x,y)$ est le profil observé dans le plan transversal.

6. Méthode de mise en forme spatiale d'un faisceau laser selon la revendication 5, **caractérisée en ce que** le calcul des rapports entre les composantes du profil de consigne et des composantes correspondantes du profil observé dans la base adaptée est effectué par $\tilde{\mathbf{r}}_n = \tilde{\mathbf{B}}_n^{-1}\tilde{\mathbf{b}}^0$ où $\tilde{\mathbf{B}}_x$ représente la matrice des moments du profil observé, $\tilde{\mathbf{b}}^0$ est un vecteur dont les éléments donnent la projection du profil de consigne sur les différentes fonctions de la base adaptée et $\tilde{\mathbf{r}}_x$ est un vecteur dont les éléments donnent les rapports entre les composantes du profil de consigne et du profil observé dans la base adaptée.

7. Méthode de mise en forme spatiale d'un faisceau laser selon la revendication 6, **caractérisée en ce que** l'on calcule le rapport entre le profil de consigne et le profil observé dans le plan transversal à l'itération courante au moyen de

$$R_n(x,y) = \sum_{i=1}^{N}\sum_{j=1}^{N}\tilde{r}_{ij,n}f_{ij}(x,y)$$

où $f_{ij}(x,y)$ sont les fonctions de la base adaptée et $\tilde{r}_{ij,x}$ les rapports entre les composantes du profil de consigne et du profil observé à l'itération courante dans la base adaptée et que l'on déduit le vecteur de commande de l'itération courante, $\mathbf{c}_x$, comme celui dont les éléments sont les produits des éléments du vecteur de commande à l'itération précédente, $c_{n-1}$, et les valeurs du rapport $R_n(x,y)$ prises aux points où se trouvent les pixels contrôlables en transmission.

8. Méthode de mise en forme temporelle d'une impulsion laser au moyen d'un modulateur d'intensité, l'intensité de l'impulsion pouvant être contrôlée au cours du temps par un vecteur de commande, chaque élément du vecteur de commande contrôlant la transmission du modulateur en un instant donné et étant initialisé à une valeur prédéterminée, la forme temporelle à obtenir étant définie par un profil de consigne, ladite méthode comportant une pluralité d'itérations successives, le vecteur de commande étant mis à jour à chaque itération, chaque itération comprenant :

- une étape d'acquisition (820) de l'impulsion en sortie du modulateur pour obtenir un profil observé de l'impulsion ;
- une étape de calcul (830) des moments du profil observé par rapport à une base produit, la base produit étant constituée par des produits de fonctions d'une base adaptée de carré sommable sur au moins sur un intervalle de temps contenant le support du profil de consigne, les spectres desdites fonctions étant bornés par une valeur maximale prédéterminée de fréquence ;
- une étape de calcul (840) des rapports entre les composantes du profil de consigne et des composantes correspondantes du profil observé dans la base adaptée, pour en déduire le rapport entre le profil de consigne et le profil observé dans le plan transversal au cours de l'intervalle de temps ;
- une étape de détermination (850) du vecteur de commande à l'itération courante en fonction du rapport calculé à l'étape précédente et du vecteur de commande calculé à l'itération précédente ;
- une étape de commande (860) du modulateur d'intensité au moyen des éléments du vecteur de commande déterminé à l'étape précédente ;
les itérations se poursuivant jusqu'à ce qu'un critère d'arrêt prédéterminé soit satisfait.

9. Méthode de mise en forme temporelle d'une impulsion laser selon la revendication 8, **caractérisée en ce que** le modulateur d'intensité est un modulateur Mach-Zehnder.

10. Méthode de mise en forme temporelle d'une impulsion laser selon la revendication 8 ou 9, **caractérisée en ce que** l'acquisition de l'impulsion est réalisée au moyen d'une photodiode en sortie du modulateur d'intensité et d'un oscilloscope à mémoire.

11. Méthode de mise en forme temporelle d'une impulsion laser selon l'une des revendications 8 à 10, **caractérisée en ce que** la base adaptée est orthogonale et constituée de fonctions polynômiales ou monômiales.

12. Méthode de mise en forme temporelle d'une impulsion laser selon la revendication 11, **caractérisée en ce que** les fonctions polynômiales sont des polynômes de Legendre.

13. Méthode de mise en forme temporelle d'une impulsion laser selon l'une des revendications 8 à 12, **caractérisée en ce que** le calcul des moments du profil observé de l'impulsion est effectué au moyen de $\int_{\Omega} f_i(t) f_j(t) B(t) dt$ où $f_i(t), f_j(t)$ sont deux fonctions de la base adaptée et B(t) est le profil observé de l'impulsion.

14. Méthode de mise en forme temporelle d'une impulsion laser selon la revendication 13, **caractérisée en ce que** le calcul des rapports entre les composantes du profil de consigne et des composantes correspondantes du profil observé dans la base adaptée est effectué par $\tilde{\mathbf{r}}_n = \tilde{\mathbf{B}}_n^{-1} \tilde{\mathbf{b}}^0$ où $\tilde{\mathbf{B}}_x$ représente la matrice des moments du profil observé, $\tilde{\mathbf{b}}^0$ est un vecteur dont les éléments donnent la projection du profil de consigne sur les différentes fonctions de la base adaptée et $\tilde{\mathbf{r}}_x$ est un vecteur dont les éléments donnent les rapports entre les composantes du profil de consigne et du profil observé dans la base adaptée.

15. Méthode de mise en forme temporelle d'une impulsion laser selon la revendication 14, **caractérisée en ce que** l'on calcule le rapport entre le profil de consigne et le profil observé dans l'intervalle de temps au moyen de

$$R_n(t) = \sum_{i=1}^{N} \tilde{r}_{n,i} f_i(t)$$

où $\tilde{r}_{n,i}$ est la $i$-ème composante de $\tilde{\mathbf{r}}_x$ où $f_i(t)$ sont les fonctions de la base adaptée et $\tilde{r}_{x,i}$ les rapports entre les composantes du profil de consigne et du profil observé à l'itération courante dans la base adaptée et que l'on déduit le vecteur de commande de l'itération courante, $\mathbf{c}_n$, comme celui dont les éléments sont les produits des éléments du vecteur de commande à l'itération précédente, $c_{x-1}$, et les valeurs du rapport $R_n(t)$ prises aux instants auxquels la transmission du modulateur d'intensité est contrôlée.

**Patentansprüche**

1.  Verfahren zur räumlichen Formung eines Laserstrahls mittels eines optischen Ventils mit mehreren Pixeln bzw. Bildpunkten, deren Übertragung mittels eines Steuervektors steuerbar ist, wobei jedes Element des Steuervektors die Übertragung eines entsprechenden Pixels bzw. Bildpunktes steuert und auf einen vorbestimmten Wert initialisiert, wobei die räumliche Form des zu erhaltenden Strahls durch ein Sollprofil in einer Ebene quer zur Ausbreitungsrichtung des Strahls definiert wird, wobei das Verfahren mehrere aufeinanderfolgende Iterationen aufweist, wobei der Steuervektor bei jeder Iteration aktualisiert wird, wobei jede Iteration folgendes aufweist:

    - einen Schritt der Erfassung (620) des Bildes des Strahls in der genannten Querebene am Ausgang des optischen Ventils, um ein Profil des in dieser Ebene beobachteten Strahls zu erhalten;
    - einen Schritt der Berechnung (630) der Momentwerte des beobachteten Profils in Bezug auf eine Ergebnisbasis, wobei die Ergebnisbasis Produkte von Funktionen einer angepassten Basis mit summierbarem Quadrat auf mindestens einer Zone der Ebene beinhaltet, die den Träger des Sollprofils enthält, wobei die Spektren der Funktionen gemäß zwei Achsen der Ebene durch vorbestimmte Maximalwerte der Raumfrequenz begrenzt sind ;
    - einen Schritt der Berechnung (640) der Verhältnisse zwischen den Komponenten des Soll-Profils und entsprechenden Komponenten des beobachteten Profils in der angepassten Basis, um daraus das Verhältnis zwischen dem Soll-Profil und dem beobachteten Profil in der Transversalebene abzuleiten;
    - einen Schritt des Bestimmens (650) des Steuervektors bei der momentanen Iteration in Abhängigkeit von dem im vorherigen Schritt berechneten Verhältnis und dem in der vorherigen Iteration berechneten Steuervektor;
    - einen Schritt des Steuerns (660) des optischen Ventils mittels der Elemente des im vorherigen Schritt bestimmten Steuervektors;
    wobei die Iterationen so lange fortgesetzt werden, bis ein vorbestimmtes Abbruchkriterium erfüllt ist.

2.  Verfahren zur räumlichen Formung eines Laserstrahls nach Anspruch 1, **dadurch gekennzeichnet, dass** die angepasste Basis orthogonal ist und Polynomfunktionen oder Mononomfunktionen beinhaltet.

3.  Verfahren zur räumlichen Formung eines Laserstrahls nach Anspruch 2, **dadurch gekennzeichnet, dass** die Polynomfunktionen Zernike-Polynome sind.

4.  Verfahren zur räumlichen Formung eines Laserstrahls nach Anspruch 2, **dadurch gekennzeichnet, dass** die Mononomfunktionen vom Typ $f_{ij}(x,y) = x^i y^j$ mit $i + j \leq d_{max}$ sind, wobei $d_{max}$ ein vorbestimmter Maximalgrad ist und $x$, $y$ kartesische Koordinaten in der Transversalebene sind.

5.  Verfahren zur räumlichen Formung eines Laserstrahls nach Anspruch 4, **dadurch gekennzeichnet, dass** die Berechnung der Momentwerte des beobachteten Profils unter Verwendung von $\iint_\Omega f_{pq}(x,y) f_{ij}(x,y) B(x,y) dx dy$ durchgeführt wird, wobei $f_{pq}(x,y)$, $f_{ij}(x,y)$ zwei Funktionen der angepassten Basis sind und $B(x,y)$ das beobachtete Profil in der Querebene ist.

6.  Verfahren zur räumlichen Formung eines Laserstrahls nach Anspruch 5, **dadurch gekennzeichnet, dass** die Berechnung der Verhältnisse zwischen den Komponenten des Soll-Profils und entsprechenden Komponenten des beobachteten Profils in der angepassten Basis durchgeführt wird durch $\tilde{\mathbf{r}}_n = \tilde{\mathbf{B}}_n^{-1} \tilde{\mathbf{b}}^0$ wobei $\tilde{\mathbf{B}}_n$ die Matrix der Momentwerte des beobachteten Profils darstellt, $\tilde{\mathbf{b}}^0$ ein Vektor ist, dessen Elemente die Projektion des Soll-Profils auf die verschiedenen Funktionen der angepassten Basis ergeben, und $\tilde{\mathbf{r}}_x$ ein Vektor ist, dessen Elemente die Verhältnisse zwischen den Komponenten des Soll-Profils und des beobachteten Profils in der angepassten Basis ergeben.

7.  Verfahren zur räumlichen Formung eines Laserstrahls nach Anspruch 6, **dadurch gekennzeichnet, dass** das Verhältnis zwischen dem Soll-Profil und dem bei der momentanen Iteration in der Querebene beobachteten Profil mittels $R_n(x,y) = \sum_{i=1}^{N} \sum_{j=1}^{N} \tilde{r}_{ij,n} f_{ij}(x,y)$ berechnet wird, wobei $f_{ij}(x,y)$ die Funktionen der angepassten Basis und $\tilde{r}_{ij,x}$ die Verhältnisse zwischen den Komponenten des Soll-Profils und des bei der momentanen Iteration beobachteten Profils in der angepassten Basis sind, und dass der Steuervektor der momentanen Iteration, $\mathbf{c}_x$, als derjenige berechnet wird, dessen Elemente die Produkte der Elemente des Steuervektors der vorhergehenden Iteration, $c_{n-1}$, und der Werte des Verhältnisses, $R_x(x, y)$ die an den Punkten genommen werden, an denen sich die steuerbaren Pixel bzw. Bildpunkte in der Übertragung befinden, sind.

8. Verfahren zur zeitlichen Formung eines Laserimpulses mittels eines Intensitätsmodulators, wobei es möglich ist, die Intensität des Impulses über die Zeit durch einen Steuervektor zu steuern, wobei jedes Element des Steuervektors die Übertragung des Modulators in einem gegebenen Moment steuert und auf einen vorbestimmten Wert initialisiert ist, wobei die zu erreichende zeitliche Form durch ein Sollprofil definiert ist, wobei das Verfahren mehrere aufeinanderfolgende Iterationen aufweist, wobei der Steuervektor bei jeder Iteration aktualisiert wird, wobei jede Iteration Folgendes aufweist:

- einen Schritt der Erfassung (820) des Impulses am Ausgang des Modulators, um ein beobachtetes Profil des Impulses zu erhalten;
- einen Schritt des Berechnens (830) der Momentwerte des beobachteten Profils in Bezug auf eine Ergebnisbasis, wobei die Ergebnisbasis aus Produkten von Funktionen einer angepassten Basis mit summierbarem Quadrat über mindestens ein Zeitintervall gebildet wird, das den Träger des Sollprofils enthält, wobei die Spektren der Funktionen durch einen vorbestimmten maximalen Frequenzwert begrenzt sind;
- einen Schritt des Berechnens (840) der Verhältnisse zwischen den Komponenten des Soll-Profils und entsprechenden Komponenten des beobachteten Profils in der angepassten Basis, um daraus das Verhältnis zwischen dem Soll-Profil und dem beobachteten Profil in der Querebene während des Zeitintervalls abzuleiten;
- einen Schritt des Bestimmens (850) des Steuervektors bei der momentanen Iteration in Abhängigkeit von dem im vorherigen Schritt berechneten Verhältnis und dem bei der vorherigen Iteration berechneten Steuervektor;
- einen Schritt des Steuerns (860) des Intensitätsmodulators mittels der Elemente des im vorherigen Schritt bestimmten Steuervektors;

wobei die Iterationen so lange fortgesetzt werden, bis ein vorbestimmtes Abbruchkriterium erfüllt ist.

9. Verfahren zur zeitlichen Formung eines Laserpulses nach Anspruch 8, **dadurch gekennzeichnet, dass** der Intensitätsmodulator ein Mach-Zehnder-Modulator ist.

10. Verfahren zur zeitlichen Formung eines Laserpulses nach Anspruch 8 oder 9, **dadurch gekennzeichnet, dass** die Erfassung des Pulses mittels einer Fotodiode am Ausgang des Intensitätsmodulators und eines Speicheroszilloskops erfolgt.

11. Verfahren zur zeitlichen Formung eines Laserpulses nach einem der Ansprüche 8 bis 10, **dadurch gekennzeichnet, dass** die angepasste Basis orthogonal ist und Polynomfunktionen oder Mononomfunktionen beinhaltet.

12. Verfahren zur zeitlichen Formung eines Laserpulses nach Anspruch 11, **dadurch gekennzeichnet, dass** die Polynomfunktionen Legendre-Polynome sind.

13. Verfahren zur zeitlichen Formung eines Laserpulses nach einem der Ansprüche 8 bis 12, **dadurch gekennzeichnet, dass** die Berechnung der Momentwerte des beobachteten Profils des Pulses unter Verwendung von

$$\int_{\Omega} f_i(t) f_j(t) B(t) dt$$

durchgeführt wird, wobei $f_i(t), f_j(t)$ zwei Funktionen der angepassten Basis sind und $B(t)$ das beobachtete Profil des Pulses ist.

14. Verfahren zur zeitlichen Formung eines Laserpulses nach Anspruch 13, **dadurch gekennzeichnet, dass** die Berechnung der Verhältnisse zwischen den Komponenten des Soll-Profils und entsprechenden Komponenten des beobachteten Profils in der angepassten Basis durch $\tilde{\mathbf{r}}_n = \tilde{\mathbf{B}}_n^{-1} \tilde{\mathbf{b}}^0$ erfolgt, wobei $\tilde{\mathbf{B}}_x$ die Matrix der Momentwerte des beobachteten Profils darstellt, $\tilde{\mathbf{b}}^0$ ein Vektor ist, dessen Elemente die Projektion des Soll-Profils auf die verschiedenen Funktionen der angepassten Basis ergeben, und $\tilde{\mathbf{r}}_x$ ein Vektor ist, dessen Elemente die Verhältnisse zwischen den Komponenten des Soll-Profils und des beobachteten Profils in der angepassten Basis ergeben.

**15.** Verfahren zur zeitlichen Formung eines Laserpulses nach Anspruch 14, **dadurch gekennzeichnet, dass** das Ver-

$$R_n(t) = \sum_{i=1}^{N} \tilde{r}_{n,i} f_i(t)$$

hältnis zwischen dem Soll-Profil und dem beobachteten Profil im Zeitintervall mittels _____ berechnet wird, wobei $\tilde{r}_{n,i}$ die i-te Komponente von $\tilde{\mathbf{r}}_n$ ist, wobei $f_i(t)$ die Funktionen der angepassten Basis sind und $\tilde{r}_{n,i}$ die Verhältnisse zwischen den Komponenten des Soll-Profils und des beobachteten Profils bei der momentanen Iteration in der angepassten Basis sind, und dass der Steuervektor der momentanen Iteration, $\mathbf{c}_x$, als derjenige, abgeleitet wird, dessen Elemente die Produkte der Elemente des Steuervektors bei der vorhergehenden Iteration sind, $\mathbf{c}_{x-1}$, und der Werte des Verhältnisses $R_n(t)$, die zu den Zeitpunkten genommen werden, zu denen die Übertragung des Intensitätsmodulators gesteuert wird, sind.

**Claims**

**1.** A method for spatially shaping a laser beam by means of an optical valve including a plurality of pixels controllable in transmission by means of a control vector, each element of the control vector controlling the transmission of a corresponding pixel and being initialised at a predetermined value, the spatial shape of the beam to be obtained being defined by a setpoint profile in a plane transverse to the direction of propagation of the beam, said method including a plurality of successive iterations, the control vector being updated at each iteration, each iteration comprising:

- a step (620) of acquiring the image of the beam in said transverse plane at the output of the optical valve, to obtain a profile of the observed beam in this plane;
- a step (630) of calculating the moments of the observed profile with respect to a product base, the product base consisting of products of functions of an adapted base with a square summable over at least one area of the plane containing the support of the setpoint profile, the spectra of said functions according to two axes of the plane being bordered by predetermined maximum values of spatial frequency;
- a step (640) of calculating the ratios between the components of the setpoint profile and corresponding components of the observed profile in the adapted base, to thereby deduce the ratio between the setpoint profile and the observed profile in the transverse plane;
- a step (650) of determining the control vector at the current iteration according to the ratio calculated at the previous step and the control vector calculated at the previous iteration;
- a step (660) of controlling the optical valve by means of the elements of the control vector determined at the previous step;

the iterations being carried on until a predetermined stopping criterion is met.

**2.** The method for spatially shaping a laser beam according to claim 1, **characterised in that** the adapted base is orthogonal and consists of polynomial or monomial functions.

**3.** The method for spatially shaping a laser beam according to claim 2, **characterised in that** the polynomial functions are Zernike polynomials.

**4.** The method for spatially shaping a laser beam according to claim 2, **characterised in that** the monomial functions are of the type $f_{ij}(x,y) = x^i y^j$, such that $i + j \leq d_{\max}$ where $d_{\max}$ is a predetermined maximum degree and $x, y$ are Cartesian coordinates in the transverse plane.

**5.** The method for spatially shaping a laser beam according to claim 4, **characterised in that** the calculation of the

$$\iint_\Omega f_{pq}(x,y) f_{ij}(x,y) B(x,y) dx dy$$

moments of the observed profile is performed by means of _____ where $f_{pq}(x,y)$, $f_{ij}(x,y)$ are two functions of the adapted base and $B(x,y)$ is the observed profile in the transverse plane.

**6.** The method for spatially shaping a laser beam according to claim 5, **characterised in that** the calculation of the ratios between the components of the setpoint profile and corresponding components of the observed profile in the adapted base is performed by $$\tilde{\mathbf{r}}_{x} = \tilde{\mathbf{B}}_{x}^{-1}\tilde{\mathbf{b}}^{0}$$ where $\tilde{\mathbf{B}}_{x}$ represents the matrix of the moments of the observed profile, $\tilde{\mathbf{b}}^{0}$ is a vector whose elements provide the projection of the setpoint profile on the different functions of the adapted base and $\tilde{\mathbf{r}}_{x}$ is a vector whose elements provide the ratios between the components of the setpoint profile and of the observed profile in the adapted base.

**7.** The method for spatially shaping a laser beam according to claim 6, **characterised in that** the ratio between the setpoint profile and the observed profile in the transverse plane is calculated at the current iteration by means of

$$R_{x}(x,y) = \sum_{i=1}^{N} \sum_{j=1}^{N} \tilde{r}_{ij,x} f_{ij}(x,y)$$

where $f_{ij}(x,y)$ are the functions of the adapted base and $\tilde{r}_{ij,n}$ the ratios between the components of the setpoint profile and of the observed profile at the current iteration in the adapted base and the control vector of the current iteration, $\mathbf{c}_x$, is deduced as that whose elements are the products of the elements of the control vector at the previous iteration, $\mathbf{c}_{x-1}$, and the values of the ratio $R_x(x, y)$ taken at the points where the transmission-controllable pixels are located.

**8.** A method for temporally shaping a laser pulse by means of an intensity modulator, it being possible to control the intensity of the pulse over time by a control vector, each element of the control vector controlling the transmission of the modulator at a given time point and being initialised at a predetermined value, the temporal shape to be obtained being defined by a setpoint profile, said method including a plurality of successive iterations, the control vector being updated at each iteration, each iteration comprising:

- a step (820) of acquiring the pulse at the output of the modulator to obtain an observed profile of the pulse;
- a step (830) of calculating the moments of the observed profile with respect to a product base, the product base consisting of the products of functions of an adapted base with a square summable over at least one time interval containing the support of the setpoint profile, the spectra of said functions being bordered by a predetermined maximum value of frequency;
- a step (840) of calculating the ratios between the components of the setpoint profile and corresponding components of the observed profile in the adapted base, to thereby deduce the ratio between the setpoint profile and the observed profile in the transverse plane over the time interval;
- a step (850) of determining the control vector at the current iteration according to the ratio calculated at the previous step and the control vector calculated at the previous iteration;
- a step (860) of controlling the intensity modulator by means of the elements of the control vector determined at the previous step;

the iterations being carried on until a predetermined stopping criterion is met.

**9.** The method for temporally shaping a laser pulse according to claim 8, **characterised in that** the intensity modulator is a Mach-Zehnder modulator.

**10.** The method for temporally shaping a laser pulse according to claim 8 or 9, **characterised in that** the acquisition of the pulse is carried out by means of a photodiode at the output of the intensity modulator and by a storage oscilloscope.

**11.** The method for temporally shaping a laser pulse according to one of claims 8 to 10, **characterised in that** the adapted base is orthogonal and consists of polynomial or monomial functions.

**12.** The method for temporally shaping a laser pulse according to claim 11, **characterised in that** the polynomial functions are Legendre polynomials.

**13.** The method for temporally shaping a laser pulse according to one of claims 8 to 12, **characterised in that** the calculation of the moments of the observed profile of the pulse is performed by means of $\int_{\Omega} f_i(t) f_j(t) B(t) dt$
where $f_i(t), f_j(t)$ are two functions of the adapted base and $B(t)$ is the observed profile of the pulse.

14. The method for temporally shaping a laser pulse according to claim 13, **characterised in that** the calculation of the ratios between the components of the setpoint profile and corresponding components of the observed profile in the adapted base is performed by $\tilde{\mathbf{r}}_x = \tilde{\mathbf{B}}_x^{-1}\tilde{\mathbf{b}}^0$ where $\tilde{\mathbf{B}}_x$ represents the matrix of the moments of the observed profile, $\tilde{\mathbf{b}}^0$ is a vector whose elements provide the projection of the setpoint profile on the different functions of the adapted base and $\tilde{\mathbf{r}}_x$ is a vector whose elements provide the ratios between the components of the setpoint profile and of the observed profile in the adapted base.

15. The method for temporally shaping a laser pulse according to claim 14, **characterised in that** the ratio between the setpoint profile and the observed profile in the time interval is calculated by means of

$$R_n(t) = \sum_{i=1}^{N} \tilde{r}_{n,i} f_i(t)$$

where $\tilde{r}_{n,i}$ is the $i^{th}$ component of $\tilde{\mathbf{r}}_n$ where $f_i(t)$ are the functions of the adapted base and $\tilde{r}_{n,i}$ the ratios between the components of the setpoint profile and of the observed profile at the current iteration in the adapted base and the control vector of the current iteration, $\mathbf{c}_n$, is deduced as that whose elements are the products of the elements of the control vector at the previous iteration, $\mathbf{c}_{n-1}$, and the values of the ratio $R_n(t)$ taken at the time points at which the transmission of the intensity modulator is controlled.

**Fig. 1**

**Fig. 2**

**Fig. 3**

410

$B(t)$

420

c

**Fig. 4**

Iteration_04PCtaFTSomme

— Consigne
— Mesure

(U.A.)

**Fig. 5**

initialisation du compteur d'iterations: $n = 1$
initialisation du vecteur de commande: $\mathbf{c}_0 = \mathbf{1}$
projection du profil spatial de consigne sur la base adaptée: $\tilde{b}_{pq}^0$ — 610

acquisition d'une image du faisceau
correction du dévers, centrage, grandissement
obtention du profil observé: $B_n(x, y)$ — 620

calcul des moments du profil observé par rapport à la base produit

$$\tilde{b}_{k\ell,n} = \left( \iint f_{pq}(x, y) f_{ij}(x, y) B_n(x, y) dx dy \right)$$

— 630

calcul des rapports entre les composantes du profil de consigne et celles du profil observé dans la base adaptée

$$\tilde{\mathbf{r}}_n = \tilde{\mathbf{B}}_n^{-1} \tilde{\mathbf{b}}^0$$

calcul du rapport du profil de consigne et du profil observé dans le plan transversal

$$R_n(x, y) = \sum_{i=1}^{N} \sum_{j=1}^{N} \tilde{r}_{ij,n} f_{ij}(x, y)$$

— 640

détermination du vecteur de commande à l'itération courante

$$\mathbf{c}_n = \mathbf{r}_n \odot \mathbf{c}_{n-1}$$

stockage de $\mathbf{c}_n$ pour l'itération suivante
application de la commande $\mathbf{c}_n$ aux pixels de la valve optique — 650

critère d'arrêt satisfait ? — 660

N

Y

fin — 670

**Fig. 6**

Fig. 7

initialisation du compteur d'iterations: $n = 1$

initialisation du vecteur de commande: $\mathbf{c}_0 = 1$

projection du profil temporel de consigne sur la base adaptée: $\tilde{b}_j^0$

810

acquisition d'une impulsion en sortie du modulateur

obtention du profil observé: $B_n(t)$

820

calcul des moments du profil observé par rapport à la base produit

$$\tilde{b}_{ij,n} = \int f_i(t) f_j(t) B(t) dt$$

830

calcul des rapports entre les composantes du profil de consigne et celles du profil observé dans la base adaptée

$$\tilde{\mathbf{r}}_n = \tilde{\mathbf{B}}_n^{-1} \tilde{\mathbf{b}}^0$$

calcul du rapport du profil de consigne et du profil observé dans l'intervalle de temps

$$R_n(t) = \sum_{i=1}^{N} \tilde{r}_{n,i} f_i(t)$$

840

détermination du vecteur de commande à l'itération courante

$$\mathbf{c}_n = \mathbf{r}_n \odot \mathbf{c}_{n-1}$$

stockage de $\mathbf{c}_n$ pour l'itération suivante

application de la commande $\mathbf{c}_n$ au modulateur

850

critère d'arrêt satisfait ?

860

N

Y

870

fin

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T.BAUMERT et al.** Femtosecond pulse shaping by an evolutionary algorithm with feedback. *Appl. Phys. B,* 1997, vol. 65, 779-782